# EUROPEAN PATENT APPLICATION

(11) **EP 1 671 870 A1**
(43) Date of publication of application: **21.06.2006**
(21) Application number: 05077716.8
(22) Date of filing: 01.12.2005
(51) Int. Cl.: B62D 1/185, B62D 1/19, F16C 3/03

(54) **Sterring column collapse guidance system**

(30) Priority: 20.12.2004 US 18619
(71) Applicant: Delphi Technologies, Inc., Troy, MI 48007 (US)
(72) Inventor: Riefe, Richard K., Saginaw, MI 48609 (US); Vincent, Matthew J-T, Saginaw, MI 48603 (US)
(74) Representative: Denton, Michael John

(57) **Abstract**

The invention provides a steering column assembly (10) having a first steering column member (12) with an upper end (14) and a mounting feature (16). The mounting feature (16) is operative to support against rotation relative to a vehicle and includes first and second mounting portions (30, 32). The steering column assembly (10) also includes a second steering column member (18) having a lower end (20). The second steering column member (18) is operatively connected to the first steering column member (12) for telescoping movement along a column axis (22). The steering column assembly (10) also includes a first bushing (24) connected to the upper end (14) and disposed between the first steering column member (12) and the second steering column member (18) for supporting the telescoping movement. The steering column assembly (10) also includes a second bushing (26) connected to the lower end (20) and disposed between the first steering column member (12) and the second steering column member (18) for supporting the telescoping movement. The second bushing (26) is disposed between the first and second mounting portions (30, 32) along the column axis (22).

## Description

### TECHNICAL FIELD

The invention relates to steering columns for vehicles and more particularly to a system for enhancing telescopic adjustment of an adjustable steering column by reducing the friction between two telescopically engaged steering column members.

### BACKGROUND OF THE INVENTION

Steering columns for vehicles often include first and second members that are telescopically moveable with respect to one another. The telescopic movement can be advantageously used for adjusting the position of the steering wheel in the vehicle. In addition, or alternatively, the telescopic movement can be advantageously used for absorbing kinetic energy associated with an impact situation such as a vehicle crash.

### SUMMARY OF THE INVENTION

The invention provides a steering column assembly having a first steering column member with an upper end and a mounting feature. The mounting feature is operative to support against rotation relative to a vehicle and includes first and second mounting portions. The steering column assembly also includes a second steering column member having a lower end. The second steering column member is operatively connected to the first steering column member for telescoping movement along a column axis. The steering column assembly also includes a first bushing connected to the upper end and disposed between the first steering column member and the second steering column member for supporting the telescoping movement. The steering column assembly also includes a second bushing connected to the lower end and disposed between the first steering column member and the second steering column member for supporting the telescoping movement. The second bushing is disposed between the first and second mounting portions along the column axis.

The invention enhances telescopic movement by reducing friction between the first and second steering column members. Friction can detract from the effectiveness of energy absorbers associated with the steering column and can also detract from the ease of telescopically adjusting the steering column. In the exemplary embodiment of the invention described in greater detail below, friction is further reduced with stationary mounting points for the steering column and with relatively smaller cantilevered stroking length.

### BRIEF DESCRIPTION OF THE DRAWINGS

Other advantages of the present invention will be readily appreciated as the same becomes better understood by reference to the following detailed description when considered in connection with the accompanying drawings wherein:
Figure 1 is a schematic side view of a steering column according to an exemplary embodiment of the invention in a relatively telescopically extended configuration; and
Figure 2 is a schematic side view of the steering column according to the exemplary embodiment of the invention in a relatively telescopically retracted configuration.

### DESCRIPTION OF THE PREFERRED EMBODIMENT

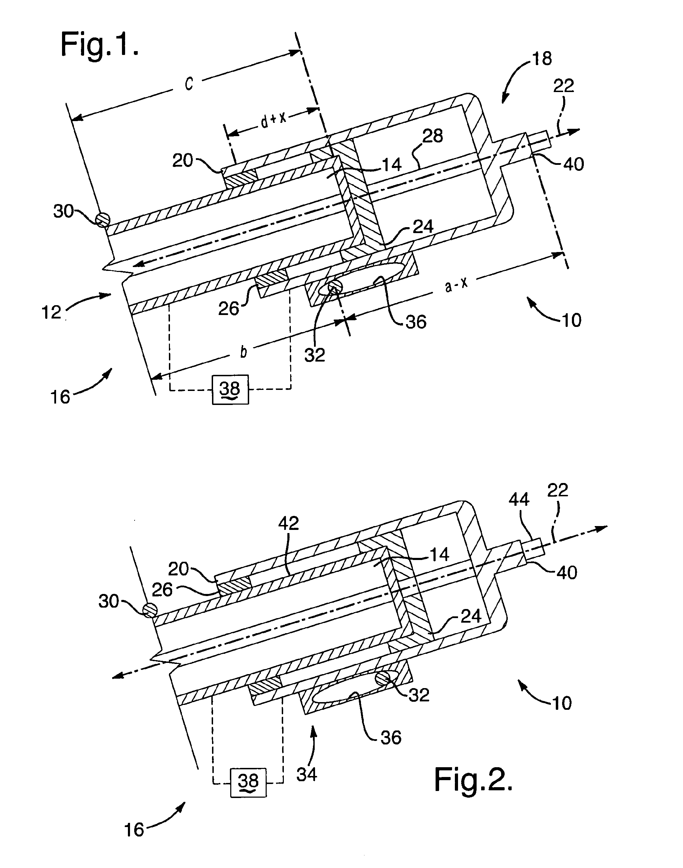

The invention provides a steering column assembly 10 having a first steering column member 12 with an upper end 14 and a mounting feature 16. The first steering column member 12 of the exemplary embodiment is a lower steering column jacket. The mounting feature 16 is operative to support against rotation relative to a vehicle. The steering column assembly 10 also includes a second steering column member 18 having a lower end 20. The second steering column member 18 of the exemplary embodiment is an upper steering column jacket. The second steering column member 18 is operatively connected to the first steering column member 12 for telescoping movement along a column axis 22. Figure 1 shows the steering column assembly 10 in a relatively telescopically extended configuration and Figure 2 shows the steering column assembly 10 in a relatively telescopically retracted configuration. The steering column assembly 10 also includes a first bushing 24 connected to the upper end 14 and disposed between the first steering column member 12 and the second steering column member 18 for supporting the telescoping movement. The first bushing 24 is fixed to the first steering column member 12. The steering column assembly 10 also includes a second bushing 26 connected to the lower end 20 and disposed between the first steering column member 12 and the second steering column member 18 for supporting the telescoping movement. The second bushing 26 is fixed to the second steering column member 18, sliding along an outer surface 42 of the first steering column member 12 during telescoping movement along the column axis 22.

The exemplary steering column assembly 10 includes a shaft 28 disposed for rotation. The shaft 28 is internal with respect to the first and second steering column members 12, 18. The shaft 28 rotates while the first and second steering column members 12, 18 are rotatably fixed. The first and second bushings 24, 26 and the first and second steering column members 12, 18 encircle the shaft 28. The shaft 28 includes a steering wheel supporting portion 44 for receiving a steering wheel.

The mounting feature 16 includes first and second mounting portions 30, 32 spaced from one another along the column axis 22. The first and second mounting portions 30, 32 are shown schematically and can be any mounting structure known in the steering column art, including, but not limited to, bolts and brackets. The first and second mounting portions 30, 32 are fixedly spaced from another during the telescoping movement.

The second steering column member 18 is slidably supported on the second mounting portion 32 in the exemplary embodiment of the invention. The second mounting portion 32 is a bolt extending transverse to the column axis 22. The second steering column member 18 includes a guiding portion 34 cooperating with the second mounting portion 32 to limit the telescoping movement along the column axis 22. The guiding portion 34 includes a slot 36 receiving the second mounting portion 32. The slot 36 defines a length of the telescoping movement along the column axis 22. For example, as best shown in Figure 1, the second mounting portion 32 is disposed at a first end of the slot 36 when the steering column assembly 10 is in a relatively telescopically extended configuration and disposed at a second end opposite of the first end when the steering column assembly 10 is in a relatively telescopically retracted configuration.

The second mounting portion 32 is disposed between the first and second bushings 24, 26 along the column axis 22. The second bushing 26 is disposed between the first and second mounting portions 30, 32 along the column axis 22.

The first steering column member 12 is fixed in the exemplary embodiment of the invention and the second steering column member 18 moves between a first position, shown in Figure 1, and a second position, shown in Figure 2, during the telescoping movement. The second steering column member 18 relatively more cantilevered with respect to the first steering column member 12 in the first position than the second position. The first and second bushings 24, 26 move away from one another during the telescoping movement between the first and second positions.

The steering column assembly 10 of the exemplary embodiment also includes an energy absorbing device 38 engaged with the first and second steering column members 12, 18 for absorbing energy associated with the telescoping movement at a predetermined rate. The resistance force to the telescoping movement can be calculated based on a number of parameters that include; a). The predetermined force and displacement characteristic of the energy absorbing device 38; and b). The angle of the column axis 22 relative to horizontal.

In general, the calculation of the resistance force to the telescoping movement also is dependent on the coefficients of friction between the sliding elements of the steering column and the lengths of the various sliding/telescoping elements. Coefficients of friction are defined between both of the first and second bushings 24,26 and the respective first and second steering column members 12,18. One length to consider is a distance between the first mounting portion 30 and the first bushing 24. Another length is the distance between the first and second bushings 24,26. Another length is a distance between the second mounting portion 32 and the distal end 40. Another length is the distance between the first and second mounting portions 30,32. Another coefficient of friction exists between the second mounting portion 32 and the second steering column member 18.

While the invention has been described with reference to an exemplary embodiment, it will be understood by those skilled in the art that various changes may be made and equivalents may be substituted for elements thereof without departing from the scope of the invention. In addition, many modifications may be made to adapt a particular situation or material to the teachings of the invention without departing from the essential scope thereof. Therefore, it is intended that the invention not be limited to the particular embodiment disclosed as the best mode contemplated for carrying out this invention, but that the invention will include all embodiments falling within the scope of the appended claims.

## Claims

1. A steering column assembly (10) comprising:
a first steering column member (12) having an upper end (14) and a mounting feature (16) operative to support against rotation relative to a vehicle, said mounting feature (16) having first and second mounting portions (30, 32) spaced from one another along said column axis (22);
a second steering column member (18) having a lower end (20) and operatively connected to said first steering column member (12) for telescoping movement along a column axis (22);
a first bushing (24) connected to said upper end (14) and disposed between said first steering column member (12) and said second steering column member (18) for supporting said telescoping movement; and
a second bushing (26) connected to said lower end (20) and disposed between said first steering column member (12)and said second steering column member (18) for supporting said telescoping movement, wherein said second bushing (26) being disposed between said first and second mounting portions (30, 32) along said column axis 22.

2. The steering column assembly (10) of claim 1 further comprising:
a shaft (28) disposed for rotation internally with respect to said first and second steering column members (12, 18), wherein said first and second bushings (24, 26) and said first and second steering column members (12, 18) encircle said shaft (28).

3. The steering column assembly (10) of claim 1 wherein said second steering column member (18) is slidably supported on said second mounting portion (32).

4. The steering column assembly (10) of claim 1 wherein said second mounting portion (32) is disposed between said first and second bushings (24, 26) along said column axis (22).

5. The steering column assembly (10) of claim 1 wherein said first and second mounting portions (30, 32) are fixedly spaced from another during said telescoping movement.

6. The steering column assembly (10) of claim 1 wherein said second steering column member (18) further comprises:
a guiding portion (34) cooperating with said second mounting portion (32) to limit said telescoping movement along said column axis (22).

7. The steering column assembly (10) of claim 6 wherein said guiding portion (34) includes a slot (36) receiving said second mounting portion (32).

8. The steering column assembly (10) of claim 7 wherein said slot (36) defines a length of said telescoping movement along said column axis (22).

9. The steering column assembly (10) of claim 1 wherein said first steering column member (12) is fixed and said second steering column member (18) moves between a first position and a second position during said telescoping movement, said second steering column member (18) relatively more cantilevered with respect to said first steering column member (12) in said first position than said second position.

10. The steering column assembly (10) of claim 9 wherein said first and second bushings (24, 26) move away from one another during said telescoping movement between said first and second positions.
